# EUROPEAN PATENT SPECIFICATION

(11) **EP 0 743 158 B1**
(45) Date of publication and mention of the grant of the patent: **04.08.1999**
(21) Application number: 96107498.6
(22) Date of filing: 10.05.1996
(51) Int. Cl.: B29C 45/27

(54) **Injection molding hot tip side gate seal with circumferential rim**
Heisse seitliche Spritzgiessanschnittabdichtung mit Umfangsrand
Joint d'entrée d'injection latérale chaud avec rebord circonférentiel

(30) Priority: 15.05.1995 CA 2149387
(43) Date of publication of application: 20.11.1996
(73) Proprietor: Gellert, Jobst Ulrich, Georgetown Ontario L7G 2X1 (CA)
(72) Inventor: Gellert, Jobst Ulrich, Georgetown Ontario L7G 2X1 (CA)
(74) Representative: Grünecker, Kinkeldey, Stockmair & Schwanhäusser Anwaltssozietät

(56) References cited:
- EP-A- 0 407 971
- EP-A- 0 528 316
- WO-A-91/13742
- DE-A- 4 424 863

## Description

This invention relates generally to injection molding and more particularly to a side gate injection molding apparatus according to the preamble of claim 1.

As seen in the applicant's U.S. Patent Number 4,795,338 which issued January 3, 1989, hot tip gating from a nozzle to a single gate on the longitudinal axis of the nozzle is well known. Edge gating from a nozzle through a number of edge gate seals is also well known, as seen in U.S. Patent Number 4,981,431 to Schmidt which issued January 1, 1991. While these previous seals have an outer sealing flange or rim, in order to prevent melt leakage it is necessary to provide sealing contact between the outer face of the rim and the mold. A space is provided around the circumference of the sealing rim to allow for longitudinal thermal expansion and contraction of the nozzle. While this is satisfactory for some applications, it has the disadvantage that it is difficult to provide the close tolerances necessary to ensure a tight seal between the outer face of the rim and the mold. Also, different operating temperatures for different applications results in different thermal expansion of the edge gate seals.

From DE 44 24 863 A1 a side gate hot molding means is known. Said means comprises a housing to receive a molding center member. The center member extends axially within the housing and has an axially extending mold injecting channel. Said melt injection channel is connected with a number of radial extending side openings to convey melt from the melt injection channel to a number of radially extending torpedo-tip means. Each tip means has a rear end connected with the front end of the respective radially extending side openings and a front end having a substantial axially extending sealing surface adapted to be in pressure contact with a substantial axially extending side surface of a tool plate. The torpedo-tip further extends radially outwardly with regard to the front end of the torpedo-tip means and is received in a prechamber of the tool plate.

It is an objective of the present invention to provide a side gate injection molding apparatus as indicated above having an improved sealing property.

According to the present invention, this objective is performed by a side gate injection molding apparatus as indicated above having the characterizing features of claim 1.

Hereinafter the present invention is illustrated and further explained in details by the preferred embodiments in conjunction with the accompanying drawings. In the drawings wherein:
Figure 1 is a sectional view of a portion of a side gated injection molding system according to one embodiment,
Figure 2 is an isometric view of one of the side gate seals seen in Figure 1,
Figure 3 is a sectional view clearly showing a seal is provided around the sealing rim of the same side gate seal, and
Figure 4 is a sectional view showing assembly of a side gate seal according to another embodiment,

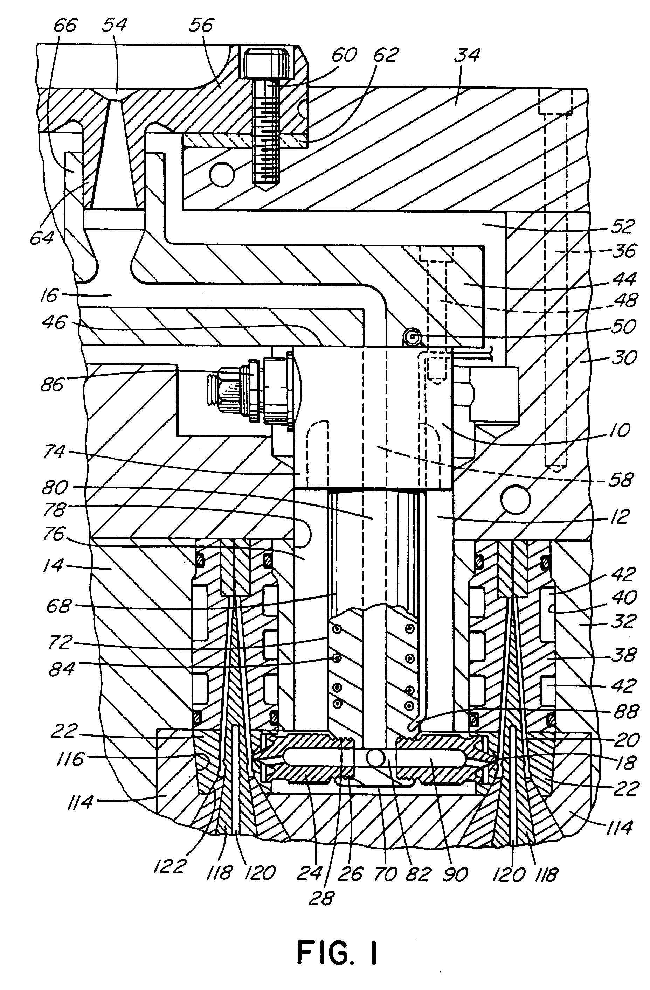

Reference is first made to Figure 1 which shows a portion of a multi-cavity side gated injection molding system or apparatus in which several steel nozzles 10 are mounted in cylindrical openings 12 in a mold 14 to convey pressurized melt through a melt passage 16 to gates 18 leading to cavities 20 in the mold. In this embodiment, several elongated cavities 20 are spaced around each nozzle 10 and each gate 18 extends through a gate insert 22 seated in the mold 14. Each gate 18 is aligned with a side gate seal 24 according to the invention as described in more detail below. In this embodiment, the side gate seal 24 has a threaded inner end 26 which is screwed into a threaded seat 28 in the nozzle 10.

While molds have a wide variety of configurations, in this case a spacer plate 30 is mounted between a cavity plate 32 and a back plate 34 which are secured together by screws 36 in a conventional manner. The spacer plate 30 and cavity plate 32 are precisely aligned by dowel pins (not shown). In this arrangement, each elongated cavity 20 extends partially in the gate insert 22 and partially in a cavity insert 38 against which the gate insert 22 is securely mounted. A number of the cavity inserts 38 are spaced around each nozzle 10 in holes 40 in the cavity plate 32. Cooling water is pumped through cooling conduits 42 extending around each cavity insert 38 to provide cooling between the heated nozzle 10 and the cavities 20.

The nozzles 10 are interconnected by a steel melt distribution manifold 44 which extends between the spacer plate 30 and the back plate 34 and is secured against the rear ends 46 of the nozzles 10 by screws 48. The melt distribution manifold 44 is heated by an integral electrical heating element 50 and an insulative air space 52 is provided between it and the surrounding cooled spacer plate 30 and back plate 34. The melt passage 16 receives melt from a molding machine (not shown) through a central inlet 54 in a locating ring 56 seated in the back plate 34 and branches out in the manifold 44 to pass through a melt channel 58 which extends longitudinally in each of the nozzles 10. The locating ring 56 is secured in place by screws 60 which extend through an insulation ring 62 formed of a suitable glass-epoxy material into the back plate 34. The locating ring 56 has a sprue stem 64 projecting into a cylindrical inlet portion 66 of the heated manifold 44 to allow for movement of the manifold 44 and the screw mounted nozzles 10 during installation and to provide for thermal expansion and contraction as described below.

Each nozzle 10 has a front portion 68 with a front end 70 and a generally cylindrical outer surface 72. The nozzle 10 has an insulation and location flange portion 74 which fits in the cylindrical opening 12 in the spacer plate 30. This accurately locates the front portion 68 of the nozzle 10 centrally between the cavities 20 and provides an insulative air space 76 between the outer surface 72 of the front portion 68 of the nozzle 10 and the surrounding cylindrical inner surface 78 of the central opening 12. The melt channel 58 in the nozzle 10 has a central portion 80 extending from the rear end 46 to a number of radial portions 82 which branch outwardly adjacent the front end 70 of the front portion 68 of the nozzle 10. The nozzle 10 is heated by an integral electrical heating element 84 which extends around the central portion 80 of the melt channel 58 and has an external terminal 86. A thermocouple element 88 extends into the nozzle 10 near the front end 70 to monitor the operating temperature.

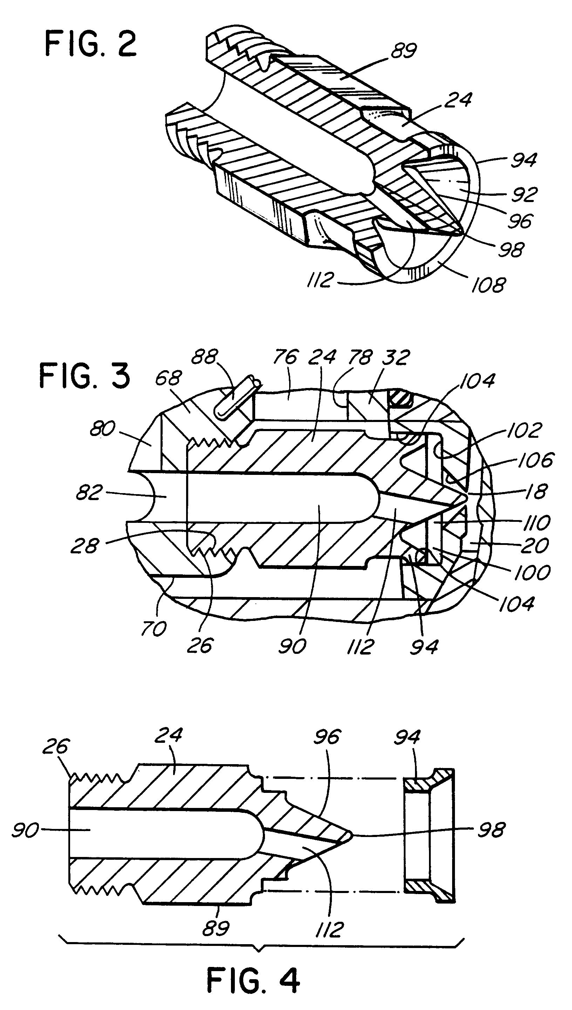

Each side gate seal 24 is screwed into the threaded seat 28 in the front portion 68 of the nozzle 10 and extends outwardly across the insulative air space 76 around the nozzle 10. It has a hexagonal central portion 89 to be engaged by a wrench to tighten the side gate seal 24 into place. The side gate seal 24 has a melt bore 90 which is aligned to receive melt from one of the radial portions 82 of the melt channel 58 in the nozzle 10. As seen in Figures 2 and 3, the side gate seal 24 has an outer end 92 with a cylindrical sealing rim 94 extending around a conical central portion 96 with a pointed tip 98. The mold 14 has a radial opening 100 leading to each gate 18 in which the outer end 92 of the respective side gate seal 24 is received. The radial opening 100 has a surface 102 with an outer cylindrical portion 104 extending concentrically with the gate 18 and an inner portion 106 extending from the outer cylindrical portion 104 to the gate 18. Each side gate seal 24 is mounted with its outer end 92 received in one of the radial openings 100 in the mold 14 with the cylindrical sealing rim 94 of the side gate seal 24 fitting in the cylindrical portion 104 of the radial opening 100. While there is sealing contact between the cylindrical sealing rim 94 and the surrounding cylindrical portion 104 of the radial opening 100, there is no contact between the outer face 108 of the cylindrical sealing rim 94 and the inner portion 106 of the surface 102 of the radial opening 100. Thus, the nozzle 10 is located longitudinally with the pointed tip 98 of each side gate seal 24 accurately aligned with a respective gate 18, but the cylindrical sealing rim 94 of each side gate seal 24 is free to slide slightly inwardly and outwardly in the surrounding cylindrical portion 104 of the respective radial opening 100 to allow for thermal expansion of the side gate seal 24. The sealing contact between the cylindrical sealing rim 94 and the surrounding cylindrical portion 104 of the radial opening 100 also forms a sealed circular space 110 between the inner portion 106 of the surface 102 of the radial opening 100 in the mold 14 and the conical central portion 96 of the outer end 92 of the side gate seal 24. As seen in Figure 3, the melt bore 90 through the side gate seal 24 has a diagonal portion 112 which extends outwardly to convey melt into the sealed circular space 110. The melt then flows from the sealed circular space 110 outwardly around the pointed tip 98 of the side gate seal 24 and through the aligned gate 18 to the cavity 20. In this embodiment, the outer end 92 of each side gate seal 24 extends outwardly past the inner surface 78 of the central opening 12 in the mold 14 a sufficient distance to provide room for the cooling conduits 42 extending between the nozzle 10 and the cavities 20.

During assembly, in this embodiment the nozzles 10 are each attached to the manifold 44 by the screws 48. Each nozzle 10 is mounted with its front portion 68 projecting through the opening 12 in the mold 14. The nozzles 10 and attached manifold 44 are advanced forwardly to provide room for the side gate seals 24 to be easily screwed into place in the threaded seats 28. The manifold 44 and attached nozzles 10 are then retracted to the position shown in Figure 1 and a gate insert 22 is mounted in place on each side gate seal 24 by inserting it upwardly and then sliding it radially inward over the outer end 92 of the side gate seal 24. A gate insert retainer plate 114 is then secured in place by screws (not shown). The gate insert retainer plate 114 has recesses 116 therein in which the gate inserts 22 are received. This holds the gate inserts 22 in place which in turn locate the nozzles 10 in the retracted assembled position. The recesses 116 in the gate insert retainer plate 114 and the inserts 22 are tapered to provide for easy assembly and ensure a tight fit. Finally, the cavity cores 118 with central cooling conduits 120 are secured in place extending through a hole 122 in each gate insert 22 into the adjacent cavity insert 38. Of course, the nozzle 10 and side gate seals 24 are removable for cleaning or replacement by reversing this procedure.

In use, after installation in the mold 14 as seen in Figure 1, electrical power is applied to the heating element 50 in the manifold 44 and to the heating elements 84 in the nozzles 10 to heat them to a predetermined operating temperature. As described above, the nozzles 10 are located longitudinally by the circumferential sealing rims 94 of the side gate seals 24 being seated in the radial openings 100 in the gate inserts 22. When the system is heated up, thermal expansion of the nozzles 10 causes the floating manifold 44 to move slightly rearwardly. This movement is accommodated by the nozzle stem 64 of the locating ring 56 sliding inside the heated cylindrical inlet portion 66 of the manifold 44 and by the insulation and location flange portion 74 of each nozzle 10 sliding in the cental opening 12 in the spacer plate 30. While a system having a number of nozzles 10 is shown, in other embodiments having only a single nozzle no melt distribution manifold is required and the rear end of the nozzle retracts and advances slightly to provide for thermal expansion and contraction. Pressurized melt is applied from a molding machine (not shown) to the central inlet 54 of the melt passage 16 according to a predetermined cycle. The melt flows through the melt distribution manifold 44, nozzles 10, side gate seals 24, and gates 18 into the cavities 20. After the cavities 20 are filled and a suitable packing and cooling period has expired, the injection pressure is released and the melt conveying system is decompressed to avoid stringing through the open gates 18. The mold 14 is then opened to eject the molded products. After ejection, the mold 14 is closed and the cycle is repeated continuously with a cycle time dependent upon the size of the cavities 20 and the type of material being molded.

Figure 4 shows a side gate seal 24 according to another embodiment of the invention in which the cylindrical sealing rim 94 is made of a different material than the rest of the side gate seal 24. In this case, the cylindrical sealing rim 94 is made of stainless steel and laser welded in place on the rest of the side gate seal 24 which is made of a copper alloy. The combination of the stainless steel and copper alloy provides the advantage that the high thermal conductivity of the copper alloy improves heat transfer along the conical central portion 96 to and from the pointed tip 98 during the injection cycle without increasing heat loss to the surrounding cooled mold.

While the description of the apparatus in which the means performing the sealing property are formed around cylindrical rims 94 of the side gate seals 24 has been given with respect to preferred embodiments, it will be evident that various other modifications are possible without departing from the scope of the invention as understood by those skilled in the art and as defined in the following claims.

## Claims

1. Side gated injection molding apparatus having at least one heated nozzle (10) located in a mold (14), the at least one heated nozzle (10) having a rear end (46), a front portion (68) with a front end (70) and a generally cylindrical outer surface (72) extending through a central opening (12) in the mold (14), the central opening (12) in the mold (14) having a generally cylindrical inner surface (78) with an insulative air space (76) provided between the outer surface (72) of the front portion (68) of the at least one heated nozzle (10) and the inner surface (78) of the central opening (12) in the mold (14), the at least one heated nozzle (10) having a melt channel (58) extending therethrough to convey melt to fill a plurality of cavities (20) spaced in the mold (14) around the central opening (12), the melt channel (58) having a central portion (80) extending from the rear end (46) of the at least one heated nozzle (10) and a plurality of radial portions (82) branching outwardly from the central portion (80) adjacent the front end (70) of the front portion (68) of the at least one heated nozzle (10), each radial portion (82) of the melt channel (58) extending in alignment with a respective gate (18) extending in the mold (14) to one of the cavities (20), a plurality of spaced side gate seals (24), each side gate seal (24) having an inner end (26), and outer end (92), and a bore (90) therebetween, the inner end (26) being seated in the front portion (68) of the at least one heated nozzle (10) with the side gate seal (24) extending radially outwardly across the insulative air space (76) in alignment between a respective radial portion (82) of the melt channel (58) and a respective gate (18) to convey melt outwardly from the melt channel (58) to the gate (18) to fill the cavity (20), **characterized in that**
the outer end (92) of each side gate seal (24) has a cylindrical sealing rim (94) extending around a conical central portion (96) with a pointed tip (98), the mold (14) has a radial opening (100) leading to each gate (18), each radial opening (100) has a surface (102) with an outer cylindrical portion (104) extending concentrically with the gate (18) and an inner portion (106) extending between the outer cylindrical portion (104) and the gate (18), the side gate seals (24) being mounted with the outer end (92) of each side gate seal (24) received in a respective one of the radial openings (100) with the cylindrical sealing rim (94) of the side gate seal (24) fitting in the cylindrical portion (104) of the radial opening (100) whereby sealing contact between each sealing rim (94) and the surrounding cylindrical portion (104) of the radial opening (100) in the mold (14) locates the nozzle (10) with the pointed tip (98) of each side gate seal (24) accurately aligned with a respective gate (18) and forms a sealed circular space (110) between the inner portion (106) of the surface (102) of the radial opening (100) and the conical central portion (96) of the side gate seal (24), the bore (90) through each side gate seal having a portion (112) extending diagonally to convey melt into the sealed circular space (110), from which sealed circular space (110) the melt flows outwardly around the pointed tip (98) of the side gate seal (24) and through the aligned gate (18) to the cavity (20).

## Patentansprüche

1. Seitenanguß-Spritzgießapparat mit zumindest einer beheizten Düse (10), die in einer Form (14) angeordnet ist, die zumindest eine beheizte Düse (10) weist ein rückwärtiges Ende (46), einen vorderen Abschnitt (68) mit einem vorderen Ende (70) und eine im wesentlichen zylindrische Außenoberfläche (72) auf, die sich durch eine zentrale Öffnung (12) in der Form (14) erstreckt, die zentrale Öffnung (12) in der Form (14) weist eine im wesentlichen zylindrische Innenoberfläche (78) mit einem Isolierluftraum (76) auf, der zwischen der Außenoberfläche (72) des vorderen Abschnitts (68) der zumindest einen beheizten Düse (10) und der Innenoberfläche (78) der zentralen Öffnung (12) in der Form (14) vorgesehen ist, die zumindest eine beheizte Düse (10) weist einen durch sie hindurchgehenden Schmelzekanal (58) auf, um Schmelze zum Füllen einer Vielzahl von Hohlräumen (20) zu befördern, die in der Form (14) um die zentrale Öffnung (12) angeordnet sind, der Schmelzekanal (58) weist einen zentralen Abschnitt (80) auf, der sich von dem rückwärtigen Ende (46) der zumindest einen beheizten Düse (10) erstreckt, und eine Vielzahl von radialen Abschnitten (82), die sich nach außen von dem zentralen Abschnitt (80) verzweigen, benachbart zu dem vorderen Ende (70) des vorderen Abschnitts (68) der zumindest einen beheizten Düse (10), jeder radiale Abschnitt (82) des Schmelzekanals (58) erstreckt sich in Ausrichtung zu einem jeweiligen Anguß (18), der sich in der Form (14) zu einem der Hohlräume (20) erstreckt, eine Mehrzahl beabstandeter Seitenangußdichtungen (24) sind vorgesehen, wobei jede Seitenangußdichtung (24) ein inneres Ende (26), ein äußeres Ende (92) und dazwischen eine Bohrung (90) aufweist, das innere Ende (26) ist in dem vorderen Abschnitt (68) der zumindest einen beheizten Düse (10) eingesetzt, wobei sich die Seitenangußdichtung (24) radial nach außen quer zu dem Isolierluftraum (76) in Ausrichtung zwischen einem jeweiligen radialen Abschnitt (82) des Schmelzekanals (58) und einem jeweiligen Anguß (18) erstreckt, um Schmelze nach außen von dem Schmelzekanal (58) zu dem Anguß (18) zu befördern, um den Hohlraum (20) zu füllen,
**dadurch gekennzeichnet**, daß
das äußere Ende (92) jeder Seitenangußdichtung (24) eine zylindrische Dichtkrempe (94) aufweist, die sich um einen konischen zentralen Abschnitt (96) mit einer Spitze (98) erstreckt, die Form (14) weist eine radiale Öffnung (100) auf, die zu jedem Anguß (18) führt, jede radiale Öffnung (100) weist eine Oberfläche (102) mit einem äußeren zylindrischen Abschnitt (104) auf, der sich konzentrisch zu dem Anguß (18) erstreckt, und einen inneren Abschnitt (106), der sich zwischen dem äußeren zylindrischen Abschnitt (104) und dem Anguß (18) erstreckt, die Seitenangußdichtungen (24) sind angebracht mit dem äußeren Ende (92) jeder Seitenangußdichtung (24) aufgenommen in der jeweiligen radialen Öffnung (100) mit der zylindrischen Dichtkrempe (94) der Seitenangußdichtung (24), eingepaßt in den zylindrischen Abschnitt (104) der radialen Öffnung (100), wodurch ein Dichtkontakt zwischen jeder Dichtkrempe (94) und dem umgebenden zylindrischen Abschnitt (104) der radialen Öffnung (100) in der Form (14) die Düse (10) positioniert mit der Spitze (98) jeder Seitenangußdichtung (24) exakt ausgerichtet zum jeweiligen Anguß (18), und bildet einen abgedichteten kreisförmigen Raum (110) zwischen dem inneren Abschnitt (106) der Oberfläche (102) der radialen Öffnung (100) und dem konischen zentralen Abschnitt (96) der Seitengußdichtung (24), wobei die Bohrung (90) durch jede Seitenangußdichtung einen Abschnitt (112) aufweist, der diagonal verläuft, um Schmelze in den abgedichteten kreisförmigen Raum (110) zu befördern, von dem abgedichteten kreisförmigen Raum (110) fließt Schmelze nach außen um die Spitze (98) der Seitenangußdichtung (24) herum und durch den ausgerichteten Anguß (18) zum Hohlraum (20).

## Revendications

1. Dispositif de moulage par injection à entrée latérale comportant au moins une buse chauffée (10) placée dans un moule (14), la au moins une buse chauffée (10) comportant une extrémité arrière (46), une partie avant (68) avec une extrémité avant (70) et une surface extérieure de manière générale cylindrique (72) s'étendant au travers d'une ouverture centrale (12) située dans le moule (14), l'ouverture centrale située dans le morne (14) ayant une surface intérieure de manière générale cylindrique (78) comportant un espace d'air isolant (76) situé entre la surface extérieure (72) de la partie avant (68) de la au moins une buse chauffée (10) et la surface intérieure (78) de l'ouverture centrale (12) située dans le moule (14), la au moins une buse chauffée (10) comportant un canal pour matériau en fusion (58) s'étendant au travers de celle-ci afin de transporter un matériau en fusion et de remplir une pluralité de cavités (20) réparties dans le moule (14) autour de l'ouverture centrale (12), le canal pour matériau en fusion (58) comportant une partie centrale (80) qui s'étend à partir de l'extrémité arrière (46) de la au moins une buse chauffée (10) et une pluralité de parties radiales (82) en bifurquant vers l'extérieur à partir de la partie centrale (80) près de l'extrémité avant (70) de la partie avant (68) de la au moins une buse chauffée (10), chaque partie radiale (82) du canal pour matériau en fusion (58) s'étendant en alignement avec une entrée respective (18) s'étendant dans le moule (14) jusqu'à l'une des cavités (20), une pluralité de joints d'entrée latérale espacés (24), chaque joint d'entrée latérale (24) comportant une extrémité intérieure (26), une extrémité extérieure (92), et un alésage (90) situé entre celles-ci, l'extrémité intérieure (26) étant en appui dans la partie avant (68) de la au moins une buse chauffée (10), le joint d'entrée latérale (24) s'étendant radialement vers l'extérieur sur l'espace d'air isolant (76) en alignement entre une partie radiale respective (82) du canal pour matériau en fusion (58) et une entrée respective (18) afin de transporter un matériau en fusion vers l'extérieur à partir du canal pour matériau en fusion (58) jusqu'à l'entrée (18) et de remplir la cavité (20),
caractérisé en ce que
l'extrémité extérieure (92) de chaque joint d'entrée latérale (24) comporte un rebord d'étanchéité cylindrique (94) qui s'étend autour d'une partie centrale conique (96) comportant une extrémité en pointe (98), le moule (14) comporte une ouverture radiale (100) menant à chaque entrée (18), chaque ouverture radiale (100) a une surface (102) qui comporte une partie extérieure cylindrique (104) s'étendant de manière concentrique à l'entrée (18) et une partie intérieure (106) s'étendant entre la partie extérieure cylindrique (104) et l'entrée (18), les joints d'entrée latérale (24) étant montés sur l'extrémité extérieure (92) de chaque joint d'entrée latérale (24) reçu dans une ouverture respective des ouvertures radiales (100), le rebord d'étanchéité cylindrique (94) du joint d'entrée latérale (24) étant ajusté dans la partie cylindrique (104) de l'ouverture radiale (100), ce qui procure un contact d'étanchéité entre chaque rebord d'étanchéité (94) et la partie cylindrique (104) de l'ouverture radiale (100) dans le moule (14), positionne la buse (10) comportant l'extrémité en pointe (98) de chaque joint d'entrée latérale (24) en alignement précis avec une entrée respective (18) et forme un espace circulaire étanche (110) entre la partie intérieure (106) de la surface (102) de l'ouverture radiale (100) et la partie centrale conique (96) du joint d'entrée latérale (24), l'alésage (90) qui passe au travers de chaque joint d'entrée latérale (24) comportant une partie (112) qui s'étend en diagonale afin de transporter le matériau en fusion à l'intérieur de l'espace circulaire étanche (110), espace circulaire étanche (110) à partir duquel le matériau en fusion s'écoule vers l'extérieur autour de l'extrémité en pointe (98) du joint d'entrée latérale (24) et au travers de l'entrée alignée (18) jusqu'à la cavité (20).
